Europäisches Patentamt

European Patent Office

Office européen des brevets

(11) Publication number: **0 053 224**
**B1**

(12) **EUROPEAN PATENT SPECIFICATION**

(45) Date of publication of patent specification: **30.07.86**

(51) Int. Cl.⁴: **G 06 K 7/016,** G 06 K 7/08

(21) Application number: **81106709.9**

(22) Date of filing: **28.08.81**

(54) **Magnetic recording apparatus.**

(30) Priority: **08.12.80 US 214317**
**08.12.80 US 214318**

(43) Date of publication of application:
**09.06.82 Bulletin 82/23**

(45) Publication of the grant of the patent:
**30.07.86 Bulletin 86/31**

(84) Designated Contracting States:
**DE FR GB IT**

(56) References cited:
**WO-A-80/02341**
**DE-A-2 517 817**
**US-A-3 272 969**
**US-A-3 914 789**
**US-A-4 128 851**
**US-A-4 173 026**
**US-A-4 176 259**

(73) Proprietor: **International Business Machines
Corporation
Old Orchard Road
Armonk, N.Y. 10504 (US)**

(72) Inventor: **Shay, Robert John Eugene
Route 8, Box 322
Salisbury North Carolina 28144 (US)**
Inventor: **Smith, Wendell Lawrence
508 Kingfield Drive
Concord North Carolina 28025 (US)**
Inventor: **Double, Glen Paul
6008 Corkstone Drive
Charlotte North Carolina 28212 (US)**

(74) Representative: **Atchley, Martin John
Waldegrave
IBM United Kingdom Patent Operations Hursley
Park
Winchester, Hants, SO21 2JN (GB)**

Courier Press, Leamington Spa, England.

## Description

This invention relates to magnetic recording apparatus, in which a magnetic record and a transducing assembly including a recording device are relatively movable along a path, and in which control circuitry responsive to a time base signal and a data signal controls the recording of data on the record.

The use of magnetic stripe cards for computer data entry has become increasingly popular in recent years. A variety of data entry applications provide simply a slot through which a magnetic stripe card can be moved by hand. The data recorded on the card typically follows a self-clocking protocol by which the form of the recorded bit pattern provides a time base reference for its own interpretation. With such a protocol, it is possible to read pre-recorded data with little constraint on the scanning speed. To write data with equal facility, however, it is necessary to supply an external control to cause the spacing between recorded bits to follow certain standards and thereby ensure that the data can be read subsequently. This is especially true where the data is to be recorded in a self-clocking protocol.

One approach to the accurate recording of the data bits on a magnetic record card is shown in US Patent A—3,914,789 which discloses a somewhat bulky optical emitter that follows, through a mechanical connection, the movement of the card to generate clock pulses in direct synchronism with the card movement. These clock pulses are used to control the recording of data pulses on the card.

In US Patent A—3,272,969 there is described a system for reading data recorded on a card which is moved past a reading head. The movement of the leading edge of the card past two spaced apart detectors is detected in order to generate two signals. These two signals are used to calculate the speed of movement of the card. In US Patent A—4,173,026 the speed of movement of a card on which is recorded data is calculated by generating signals corresponding to the movement of an indicator in the form of prerecorded magnetic bit markers on the card past a detector.

Another technique which is commonly used in a variety of data processing environments for producing clocking pulses employs a pre-recorded clock reference track that is read from the record during the time that data is being recorded on the primary data track or tracks of the record. This approach, while technically satisfactory as to accuracy and the avoidance of mechanical moving parts, is not compatible with the existing magnetic stripe card products which make no provision for a separate clock reference track.

The object of the present invention is to provide a magnetic recording apparatus for recording a time base signal and a data signal on a magnetic record such as a magnetic stripe card which includes an improved system for generating the time base signal.

The invention seeks to provide a compact encoder for recording self-clocking data tracks on a magnetic stripe card with minimum constraint on card movement.

The invention also seeks to provide a hand-operated magnetic stripe encoder having substantially no moving parts.

The invention further seeks to provide a hand-operated magnetic stripe encoder that is operable upon magnetic stripe cards which are completely compatible with other existing magnetic card readers and encoders.

According to the present invention magnetic recording apparatus, in which a magnetic record and a transducing assembly including a data recording device are relatively movable along a path, comprises a reference signal generator for generating a reference signal, a reading device located adjacent to said path and effective to generate a derived signal in response to reading an indicator recorded on said magnetic record, means for obtaining from said reference signal and said derived signal an indication of the relative velocity of said magnetic record and said transducing assembly, time base control computing means responsive to the relative velocity indication to provide a time base signal and control circuitry responsive to said time base signal and a data signal to control the recording of data on said magnetic record,

and is characterised in that the apparatus further comprises

a writing device aligned with and spaced upstream in the direction of relative movement along said path from said reading device,

and means for delivering said reference signal to said writing device to record said indicator on said magnetic record.

The invention is distinguished from the prior art arrangements in that an indicator to be read by the reading device is recorded on the magnetic record by the writing device of the apparatus of the invention instead of using the leading edge of the record or a prerecorded magnetic mark as an indicator. The advantage of such an arrangement is that the type of indicator is controlled wholly by the recording apparatus and can be changed as required and the apparatus is not limited to use with magnetic records which have a recognisable prerecorded indicator.

In accordance with the invention, magnetic recording apparatus electronically senses the relative velocity of the magnetic record and the transducing assembly during recording. The value of this relative velocity is then employed to control the delivery of clock and data bits to the data recording device such that the bits are recorded at a fixed bit density on the magnetic record in accordance with a self-clocking protocol regardless of the relative velocity, or variations in the relative velocity, of the the magnetic record and the transducing assembly.

According to one embodiment of the invention in which the magnetic record moves past the transducing assembly the relative velocity measuring is achieved by recording a reference signal on the magnetic record as it passes the writing device, and measuring the amount of time required for this record of the reference signal to travel to the reading device. From this measurement, the average velocity of the magnetic record is computed and control output is created for controlling the time interval between adjacent recorded bits. This process is repeated at intervals during the recording process to update the velocity computation as scanning proceeds.

In this embodiment of the invention, it is preferred to record the reference signal on the same track as the data being controlled. Thus the data is written over the record of the signal which, once detected, is of no further value.

In another embodiment of the invention, velocity measuring is achieved by determining the average velocity of a record card by measuring the time required for it to transverse a premeasured distance, and also determining the average acceleration experienced by the card by measuring the relative change in a frequency pattern read from the card with respect to that written thereon. A correction factor is computed from the acceleration determined. This correction factor, when added to the determined average velocity, produces a representation of instantaneous card velocity. An output is created from the computed instantaneous velocity for controlling the time interval vetween adjacent recorded bits. The instantaneous velocity is updated at frequent intervals by adding fixed velocity increments computed from the measured acceleration. At less frequent intervals, the acceleration measurement is itself redone. For longer records, the entire process can be repeated.

In this embodiment of the invention, it is preferred to record a pattern of regular flux transitions by a magnetic write head positioned a predetermined distance D upstream of a magnetic read head. A first counter accumulates a number count that measures the time required for the first flux transition to travel from the write head to the read head. Average velocity can be computed directly from this travel time count. As the pattern passes the read head, a second counter measures the flux transition frequency with respect in the frequency at which transitions of the pattern were originally supplied to the write head. Average acceleration can be computed from the contents of the two counters. Thus an initial instantaneous velocity is determined, based on the input of the two counters. Periodic updates are made as described above. When it is desired to repeat the entire process to minimize progressive accumulation of error, the frequency pattern is terminated for a period of time to create a recognizable first transition to control the first counter.

Conveniently, the velocity-measuring pattern can be recorded on the same track as the data being recorded. Thus the final data is written over the velocity-measuring patterns which, once measured, are of no further value. Since the invention provides for the correction of an average velocity measurement by taking into account the change in velocity occurring during the interval that average velocity was being measured, it is possible to accommodate a wide range of practical hand-scanning speeds and individual styles.

The scope of the invention is defined by the appended claims; and how it can be carried into effect is hereinafter particularly described with reference to the accompanying drawings, in which:

FIG. 1 is a perspective, partly broken-away view of a magnetic stripe encoder, in accordance with the invention;

FIG. 2 is a major function diagram of circuitry illustrating one embodiment of the invention;

FIG. 3 is a diagram showing an alternative implementation of computational circuitry used in the circuitry of Fig. 2;

FIG. 4 is a diagram, similar to Fig. 2, of an alternative embodiment of the invention; and

FIG. 5 is a diagram, similar to Fig. 3, for use in the embodiment of Fig. 4.

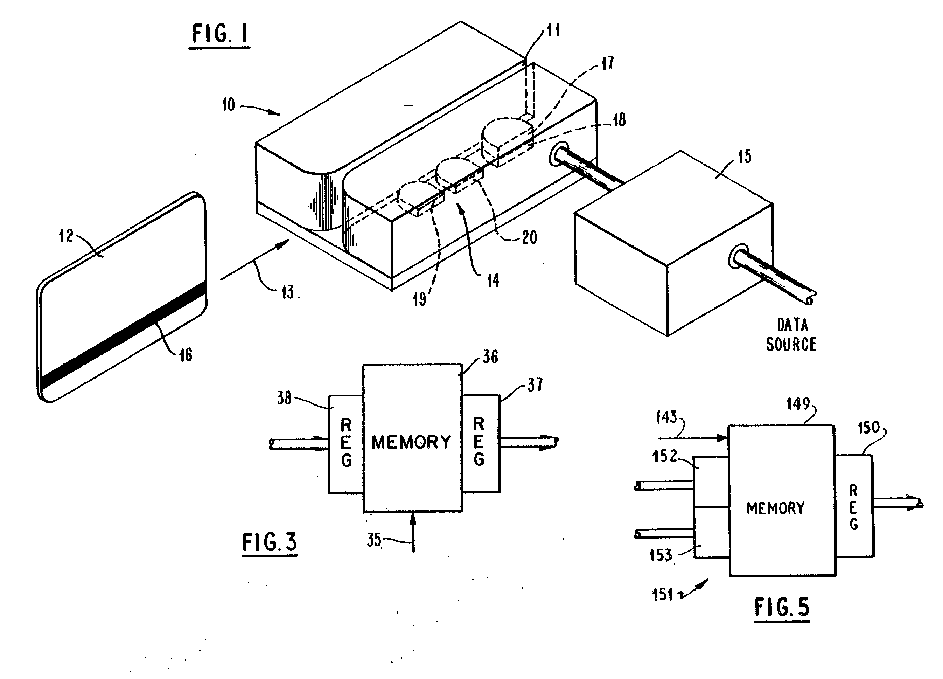

An encoder or recording station 10 (Fig. 1) has a slot 11 therein, through which a magnetic record form such as magnetic stripe card 12 can be moved by hand along path 13. A transducer assembly 14, within the section 10, operates to record data, supplied from a source (not shown), through control circuitry in control unit 15 onto a magnetic stripe 16 on the card 12. In the preferred embodiments of the invention, the transducer assembly 14 comprises one or more parallel track data recording or encoding heads 17 and 18, positioned downstream of a writing head 19 and a reading head 20, which operate to measure the velocity of the card 12 as it passes through the slot 11. Only one pair of velocity measuring heads 19 and 20 is required, regardless of the number of recording heads.

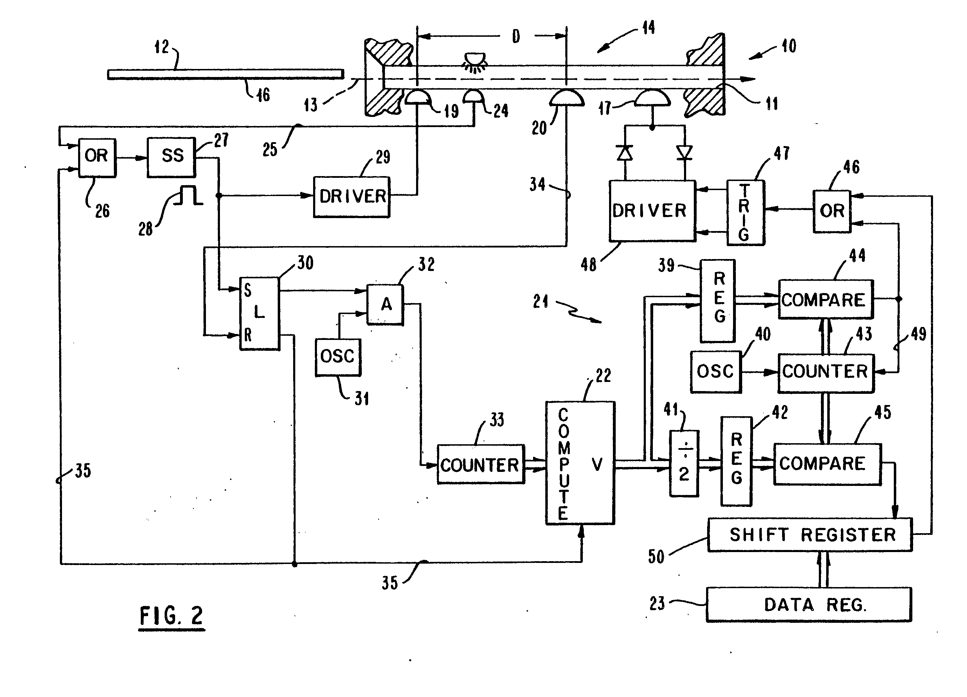

In one embodiment of the invention, each encoding head (Fig. 2) is connected to "write" control circuitry 21 which interrelates a time base control derived from velocity computing circuitry 22 with data suppliied to data output register 23 for writing binary data on the stripe 16. Only one encoding head 17 and its associated circuitry is shown and the read head 20 is spaced downstream of the write head 19 by a distance D, the encoding head 17 being aligned with heads 19 and 20. An edge detector 24, which can conveniently be a light and photocell pair, is provided to detect the presence of the edge of card 12 as it moves into slot 11.

As card 12 enters slot 11, a magnetic erase field is applied, through conventional means (not shown), to remove any previously recorded magnetic marks on stripe 16. When the leading edge of the card 12 is sensed by edge detector 24, a signal on line 25 passes through OR circuit 26 to activate a single shot circuit 27. A square wave output pulse 28 is directed to driver circuit 29 and write head 19 which records a reference pulse or transition on stripe 16. Pulse 28 also acts to set bistable latch 30 to gate pulses from 10 KHz oscillator 31 through AND gate 32 into time lapse measuring counter 33.

Continued movement of card 12 along path 11 will bring the recorded reference mark on stripe 16 to the read head 20 after card 12 has traversed distance D. Read head 20, upon perceiving the mark, provides a derived signal on line 34 that resets latch 30, thereby terminating the counting of pulses by counter 33 and, through control line 35, initiates operation of time base control computational circuitry 22 which acts on the number stored in counter 33. The signal on line 35 is also supplied to OR circuit 26 to re-activate single shot circuit 27 and provide a further measurement operation.

The details of computational circuitry 22 form no part of the invention inasmuch as there exists a variety of well known techniques for accomplishing the necessary mathematic calculation. For example, according to one straight forward technique, a microprocessor is programmed to compute

$$V = D/KC_T$$

Where V is the velocity computed,

D is the distance between heads 19 and 20,

K is a constant of proportionality to connect the pulse count $C_T$ into a direct time measurement, and

$C_T$ is the count accumulated in counter 33.

Alternatively, prewired computational logic, arranged to provide only this computation, can be employed.

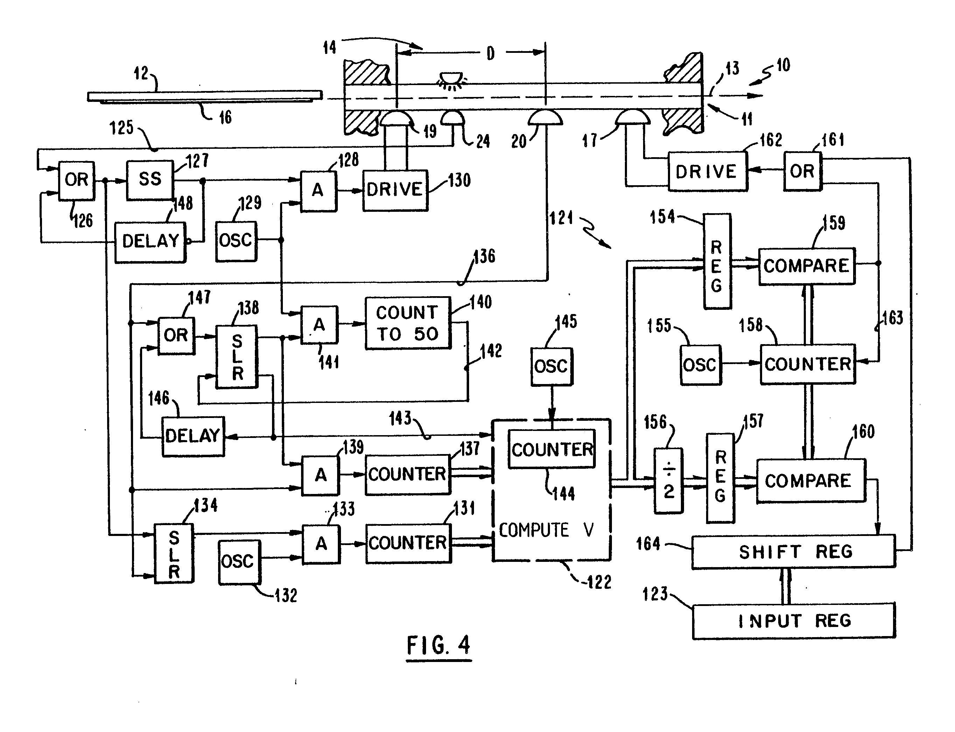

Rather than direct calculation of the function V, it is also within the skill of the art to store in table look-up memory the precalculated results of such computations at addresses which respond directly to the count accumulated in counter 33. Fig. 3 shows an arrangement for implementing this including a memory 36 having an output register 37 and an input or address register 38. The memory 36 contains a large number of data word storage locations which are each accessible by an address in register 38. The data word stored at each of the addresses is a precalculated number representing the value of V based on the numerical value of the counter 33. Accordingly, after each of the counting or measuring operations, the variable data collected in counter 33 is applied to register 38 to address the precalculated answer in memory 36 and present it to output register 37.

Computational circuitry 22 supplies the result of the function V to output register 39 of "write" control circuitry 21 in the form of a time base control number that is equal to the number of pulses of 150 KHz oscillator 40 required to measure a predetermined distance, for example 0.508 mm (0.02 ins), between successive to-be-recorded clock pulses. The time base control number is also supplied through divide-by-two circuit 41 to register 42. Thus the contents of register 42 equals the number of pulses from oscillator 40 required to measure a distance of (0.254 mm (0.01 ins)) between a clock transition and a subsequent data transition.

Oscillator 40 continuously delivers pulses to a counter 43, even during non-recording or idle conditions. Counter 43 counts to a fixed number, such as 512, and returns automatically to 0. The content of counter 43 is applied to compare circuits 44 and 45 to produce output pulses therefrom at frequencies that vary with the velocity of card 12. An output will be produced by either compare circuit 44 or 45 when it receives from counter 43 the number applied by circuitry 22 to registers 39 or 42, respectively. The output of circuit 44 is applied to control the writing of clock pulses by write head 17 through OR circuit 46, trigger circuit 47 and driver circuit 48. This output also acts through line 49 to reset counter 43 to its 0 or start condition. The output of circuit 45 is applied to gate a data bit out of shift register 50 to OR circuit 46. Since the protocol for the code to be recorded calls for a series of clock bits initially, shift register 50 will be initially loaded with a series of 0's so that the first recording by write head 17 will be simply clock bits. Shift register 50 is thereafter loaded from a data register 23 with the actual pattern of 1's and 0's to be recorded. Trigger circuit 47 alternates between its two outputs with each application of an input pulse thereby to change the direction of current supply to write head 17, either upon the receipt of a clock bit from compare circuit 44 or a data bit if a "1" is gated from shift register 50.

In another embodiment of the invention (Fig. 4) the transducer assembly 14 is similar to that of Fig. 2.

As card 12 enters slot 11, any pre-recorded marks on the magnetic stripe that would interfere with the measurement are removed by known erase means (not shown). Measurement begins by recording a frequency reference pattern onto the stripe 16 when the leading edge of the card 12 is sensed by edge detector 24. A signal on line 125 passes through OR circuit 126 to activate a single shot circuit 127. A square wave output, having a predetermined duration, is directed to AND gate 128 to control the number of pulses from reference pattern oscillator 129 which generates the reference frequency signal pattern that is applied to the writing head 19 through driver circuit 130. A satisfactory frequency for oscillator 129 is in the neighbourhood of 5 KHz which will provide the resolution necessary to accommodate variations in hand speed between 100 and 1000 mm (4 and 40 inches) per second and accelerations of up to 250 mm/sec²/100/inches/sec²). A reference frequency pattern of flux transitions is thus recorded on stripe 16 by head 19.

Counter 131 is provided to measure the time required for the first of the flux transitions recorded on stripe 16 to traverse the distance D between write head 19 and read head 20. Pulses are supplied to counter 131 from 10 KHz oscillator 132 under the control of AND gate 133 and bistable latch 134. Latch 134 is set by the leading edge of the output of OR circuit 126 to gate pulses from oscillator 132 through AND gate 133 into counter 131, beginning in substantial synchronism with the recording of the first transition by head 19.

Counter 131 continues to receive pulses from

oscillator 132 as card 12 moves along path 13 until the first of the transitions recorded on stripe 16 reaches the read head 20 after card 12 has traversed distance D. Read head 20, upon perceiving the first transition, provides a derived signal on line 136 that resets latch 134, thereby terminating the supply of pulses to counter 131.

The changed frequency of pulses due to acceleration, is monitored by read head 20 and measured by counter 137. The first pulse applied to line 136 sets bistable latch 138 through OR circuit 147 to gate subsequent pulses on line 136 through AND gate 139 to counter 137. Latch 138 also gates pulses from the 5 KHz reference pattern oscillator 129 to a count-to-fifty circuit 140 through AND gate 141.

When circuit 140 has counted fifty pulses of oscillator 129, an output on line 142 resets latch 138 to terminate counting by counter 137. Reset of latch 138 also applies a pulse on control line 143, to cause the counts in counter 131 and 137 to be transferred to computational circuitry 122 and to initiate a computational cycle of circuitry 122.

The details of computational circuitry 122 form no part of the invention inasmuch as there exists a variety of well known techniques for accomplishing the necessary mathematic calculation. For example, a microprocessor can be employed which is programmed to compute:

$$Vi = D/K_1C_T + (1/2)aK_1C_T$$

where Vi is the initial velocity computed

$K_1$ is a constant of proportionality to change counts from counter 131 to time-of-travel

D is the distance between heads 19 and 20

$C_T$ is the count accumulated in counter 131, and

a is the acceleration as determined by the function

$$a = [D/-2K_1{}^2C_T{}^2] [1 - (50/C_f)^2]$$

where, in addition to the above,

$C_f$ is the count accumulated in counter 137 during fifty counts from reference oscillator 129. $C_f$ represents the frequency read at head 20.

Alternatively, pre-wired computational logic, arranged to provide only this computation, can be employed.

The initial velocity, thus computed, remains accurate only in the unlikely circumstance that the velocity remains constant. To account more completely for the presence of acceleration, three levels of updating the computed velocity are provided.

First, it is sufficiently accurate to assume that the acceleration computed from counter 137 will remain relatively constant for short periods of time. Based on this assumption, an update velocity Vn is determined by computing $Vn = Vi + \Delta V$ at regular intervals t. To this end, circuitry 122 includes a counter 144 which continuously receives pulses from a time base source such as oscillator 145. Starting with the completion of the computation of Vi, circuitry 122 acts automatically at each occurrence of a predetermined number of additional counts in counter 144 to compute $\Delta V$, where $\Delta V = at$. The time factor t is a function of the number of counts selected plus a small fixed increment to account for computational time.

The second updating technique employed provides for re-measuring the acceleration through counter 137. Thus, the reset pulse on line 143 is supplied through delay 146 and OR circuit 147 to again set bistable latch 138 and initiate a new counting operation of counter 137. When counter 140 reaches fifty, latch 138 is again reset and an output on line 143 causes transfer of the count from counter 137 to circuitry 122 and a computation of a new acceleration to be used in subsequent updating, as described immediately above.

For records longer than fifty millimetres (two inches), it is preferred to provide a third update arrangement that effectively re-performs the entire measurement of initial velocity. The interval for remeasurement is determined by single shot 127 and inverting delay 148 which respectively control the number of transitions in the series supplied write head 19 and the duration of a quiescent period separating one such series from the next. In the rather simple embodiment shown herein, the quiescent period should be longer than the time required for a point on a card 12 to travel distance D to avoid confusing the operation of counter 131.

Rather than direct calculation of the function Vi, it is also within the skill of the art to store in table look-up memory the precalculated results of such computations at addresses which respond directly to the counts accumulated in counters 131 and 137.

As an illustrative example, Fig. 5 shows such an arrangement, including a memory 149 having an output register 150 and an input or address register 151 which is divided into sections 152 and 153. The memory 149 contains a large number of data word storage locations which are each accessible by a combined address in register 151. The data word stored at each of the addresses is a precalculated number representing the value of Vi based on the numerical value of the counters 131 and 137 which are respectively supplied to address register sections 152 and 153. Accordingly, when the calculation is to be performed, the variable data collected in counters 131 and 137 simply addresses the precalculated answer in memory 149 and presents it to output register 150.

Write control circuitry 121 (Fig. 4) takes the results of the velocity calculations and provides time base pulses at a rate necessary to cause flux transitions recorded on magnetic stripe 16 to be spaced in accordance with a prescribed standard. One convenient self-clocking format requires a spacing between successive recorded clock pulses to be 0.5 mm (0.02 inches). Data is represented in this format by the presence or absence of an additional transition recorded half-way between successive clock pulses. The distance between a clock transition and a successive data transition thus would be 0.25 mm (0.01 inches).

Through whichever means the computations are effected, computational circuitry 122 supplies the results to output register 154 in the form of a time base control number that is equal to the number of pulses of 150 KHz oscillator 155 required to measure the distance of 0.5 mm (.02 inches) between successive to-be-recorded clock pulses. The time base control number is also supplied through divide-by-two circuit 156 to register 157. Thus the contents of register 157 equals the number of pulses from oscillator 155 required to measure the distance of 0.25 mm (.01 inches) between a clock transition and a subsequent data transition.

Oscillator 155 continuously delivers pulses to counter 158 even during non-recording or idle conditions. Counter 158 counts to a fixed number, such as 512, and returns automatically to 0. The content of counter 158 is applied to compare circuits 159 and 160. An output will be produced by either compare circuit 159 or 160 when it receives from counter 158 the number applied by circuitry 122 to register 154 or 155, respectively.

The output of circuit 159 is applied to control the writing of clock pulses by write head 17 through OR circuit 161 and driver circuit 162. This output also acts through line 163 to reset counter 158 to its 0 or start condition.

The output of circuit 160 is applied to gate a data bit out of shift register 164 to OR circuit 161. Since the protocol for the code to be recorded calls for a series of clock bits initially, shift register 164 will be initially loaded with a series of 0's so that the first recording by write head 17 will be simply clock bits. Shift register 164 is thereafter loaded from a data input register 123 with the actual pattern of 1's and 0's to be recorded.

Driver circuit 162 responds to each input pulse by changing the direction of current supply to write head 17, upon the receipt of either a clock bit from compare circuit 159 or a data bit if a "1" is gated from shift register 164.

Those skilled in the art will recognize that while a specific illustrative embodiment of the invention has been disclosed, various modifications and alternatives to this embodiment can be made by those skilled in the art without departing from the scope of the invention. In particular, it is possible for the transducing assembly 14 to be mounted on a hand-held device, so that the transducer assembly can be moved manually past a stationary record form. Furthermore, the circuitry shown and particular reference patterns described can be varied to meet ordinary speed, cost and reliability requirements for a particular implementation.

**Claims**

1. Magnetic recording apparatus, in which a magnetic record (12) and a transducing assembly (14) including a data recording device (17) are relatively movable along a path (13), comprising
a reference signal generator (27; 129) for generating a reference signal,
A reading device (20) located adjacent to said path and effective to generate a derived signal in response to reading an indicator recorded on said magnetic record,
means (33; 131, 137) for obtaining from said reference signal and said derived signal an indication of the relative velocity of said magnetic record and said transducing assembly,
time base control computing means (22; 122) responsive to said relative velocity indication to provide a time base signal (49; 163)
and control circuitry responsive to said time base signal (49; 163) and a data signal (50; 164) to control the recording of data on said magnetic record,
characterised in that said apparatus further comprises
a writing device aligned with and spaced upstream in the direction of relative movement along said path from said reading device,
and means (29; 130) for delivering said reference signal to said writing device to record said indicator on said magnetic record.

2. Apparatus according to claim 1, including means (35; 148) automatically causing a further operation of the reference signal generator to deliver a further reference signal to the writing device, whereby an updated relative velocity indication is obtained.

3. Apparatus according to claim 1 or 2, in which data recorded on the record is interspersed with time base signal records.

4. Apparatus according to claim 1, 2 or 3, in which the relative velocity indication obtaining means includes means (33; 131) for measuring the time lapse between the reference signal and the derived signal.

5. Apparatus according to claim 4, in which the time lapse measuring means comprises a counter.

6. Apparatus according to claim 1, including means (129, 128) for delivering a frequency reference signal to the writing device to record a representation thereof on the record, and frequency measuring means (137, 140) responsive to signals derived by the reading device from the recorded representation of the frequency reference signal for measuring the frequency thereof, the time base control computing means (122) being further responsive to the frequency measuring means for producing time base signals for the control circuitry defining predetermined increments of displacement of the magnetic record with respect to the transducing assembly.

7. Apparatus according to claim 6, in which the frequency measuring means includes means (140) responsive to the frequency reference signal delivering means (129).

8. Apparatus according to claim 6 or 7, in which the frequency measuring means includes a counter (137).

9. Apparatus according to claim 6, 7 or 8, in which the time base control computing means is operative at intervals to modify the time base signal as a function of the passage of time.

10. Apparatus according to claim 6, 7, 8 or 9, including means (146) operable at intervals for reinitiating operation of the frequency measuring means.

11. Apparatus according to claim 6, 7, 8, 9 or 10, including means (148) operable at intervals for reinitiating the operation of frequency reference signal delivering means.

12. Apparatus according to claim 6, or any claim appendant to claim 6, in which the relative velocity indication obtaining means comprises means (131) for measuring the time interval between the recording of a portion of the frequency reference signal and the reading by the reading device of said frequency reference signal portion.

13. Apparatus according to any preceding claim in which the data recording device includes a transducer (17) positioned in substantial alignment with the writing and reading devices and downstream thereof in the direction of relative movement of the record.

14. Apparatus according to claim 13 in which the data recording means further comprises at least one additional transducer (18) positioned out of alignment with the writing and reading devices.

15. Apparatus according to any preceding claim, further comprising guide means for directing the magnetic record for manual movement along the path.

**Revendications**

1. Appareil d'enregistrement magnétique dans lequel un support magnétique (12) et un ensemble transducteur (14) comportant un dispositif d'enregistrement de données (17) sont mobiles, l'un par rapport à l'autre, le long d'un parcours (13), comprenant:
un générateur de signaux de référence (27; 129) pour la production d'un signal de référence,
un dispositif de lecture (20) adjacent au dit parcours et capable de générer un signal dérivé en réponse à la lecture d'un indicateur enregistré sur le support magnétique,
des moyens (33; 131, 137) pour l'obtention, à partir du signal de référence et du signal dérivé, d'une indication de la vitesse relative du support magnétique et de l'ensemble transducteur, des moyens de calcul (22; 122) pour la commande d'une base de temps, moyens répondant à ladite indication de vitesse relative en fournissant un signal de base de temps (49; 163) et un circuit de commande répondant au signal de base de temps (49; 163) et à un signal de données (50; 164) pour commander l'enregistrement des données sur le support magnétique,
caractérisé par le fait que cet appareil comprend en outre un dispositif d'écriture aligné avec le mouvement relatif le long dudit parcours et espacé en amont, dans la direction de ce même mouvement, du dispositif de lecture,
et des moyens (29; 130) pour délivrer le signal de référence au dispositif d'écriture afin d'enregistrer l'indicateur sur le support magnétique.

2. Appareil selon la revendication 1, comprenant des moyens (35; 148) entraînant automatiquement un fonctionnement supplémentaire du générateur de signaux de référence pour délivrer un autre signal de référence au dispositif d'écriture, afin d'obtenir une indication à jour de la vitesse relative.

3. Appareil conforme à la revendication 1 ou 2, dans lequel les données enregistrées sur le support sont intercalées avec des enregistrements du signal de base de temps.

4. Appareil conforme à l'une quelconque des revendications 1 à 3, dans lequel le moyen d'obtention de l'indication de vitesse relative inclut un moyen (33; 131) pour la mesure du temps écoulé entre le signal de référence et le signal dérivé.

5. Appareil selon revendication 4, dans lequel le dispositif de mesure du temps écoulé comprend un compteur.

6. Appareil selon revendication 1, comportant des moyens (129, 128) de délivrance d'un signal de référence de fréquence au dispositif d'écriture pour enregistrer une représentation de celui-ci sur le support magnétique et des moyens de mesure de fréquence (137, 140) répondant à des signaux dérivés par le dispositif de lecture, à partir de la représentation enregistrée du signal de référence de fréquence, pour la mesure de la fréquence de celui-ci, le moyen de calcul (122) de la commande de base de temps répondant en outre au moyen de mesure de fréquence afin de produire des signaux de base de temps pour le circuit de commande, en définissant des incréments prédéterminés de déplacement du support magnétique par rapport à l'ensemble transducteur.

7. Appareil selon la revendication 6, dans lequel le moyen de mesure de la fréquence comprend un moyen (140) qui répond au moyen (129) de délivrance des signaux de référence de fréquence.

8. Appareil selon revendication 6 ou 7, dans lequel le moyen de mesure de fréquence comprend un compteur (137).

9. Appareil selon l'une quelconque des revendications 6 à 8, dans lequel le moyen de calcul de commande de base de temps fonctionne par intervalles pour modifier le signal de base de temps en fonction du passage du temps.

10. Appareil selon l'une quelconque des revendications 6 à 9, comportant un moyen (146) pouvant fonctionner à intervalles pour relancer le fonctionnement du moyen de mesure de fréquence.

11. Appareil selon l'une quelconque des revendications 6 à 10, comprenant un moyen (148) pouvant fonctionner à intervalles pour relancer le fonctionnement du dispositif qui délivre les signaux de référence de fréquence.

12. Appareil conforme à la revendication 6, ou à une quelconque revendication rattachée à la revendication 6, dans lequel le moyen d'obtention de l'indication de vitesse relative comprend un moyen (131) pour la mesure de l'intervalle de temps entre l'enregistrement d'une partie du signal de référence de fréquence et la lecture, par le dispositif de lecture, de cette même partie du signal de référence de fréquence.

## 0 053 224

13

13. Appareil selon l'une quelconque des revendications qui précèdent, dans lequel le dispositif d'enregistrement des données comprend un transducteur (17) placé de façon à être substantiellement aligné avec les dispositifs d'écriture et de lecture et en aval de ceux-ci, dans le sens du mouvement relatif du support d'enregistrement.

14. Appareil conforme à la revendication 13, dans lequel le moyen d'enregistrement des données comprend en outre au moins un transducteur (18) supplémentaire non aligné avec les dispositifs d'écriture et de lecture.

15. Appareil selon l'une quelconque des revendications précédentes, comprenant en outre un moyen de guidage pour diriger le support magnétique lors de son déplacement manuel le long du parcours.

## Patentansprüche

1. Magnetaufzeichnungsgerät, bei dem ein magnetisches Aufzeichnungsmedium (12) und ein Meßwertwandler (14) mit einer Datenaufzeichnungseinrichtung (17) jeweils entlang eines Pfades (13) bewegbar sind, mit
— einem Bezugssignalgeber (17; 129) zum Erzeugen eines Bezugssignals;
— einem neben dem Pfad befindlichen Leseelement (20) zum Erzeugen eines abgeleiteten Signals als Reaktion auf das Lesen eines auf dem Magnetaufzeichnungsmedium gespeicherten Indikators;
— Einrichtungen (33; 131, 137), um vom Bezugssignal und vom abgeleiteten Signal eine Anzeige der relativen Geschwindigkeit des magnetischen Aufzeichnungsmediums und des Meßwertwandlers zu erhalten;
— Recheneinrichtungen (22; 122) zur Steuerung der Zeitbasis, wobei diese Einrichtungen auf die Anzeige der relativen Geschwindigkeit reagieren und ein Zeitmeßsignal (49; 163) liefern; und
— mit einer Stuerschaltung, welche auf das Zeitmeßsignal (49; 163) und ein Datensignal (50; 164) reagiert, um die Datenaufzeichnung auf dem magnetischen Aufzeichnungsmedium steuern zu können,
gekennzeichnet durch ein Schreibelement, welches mit dem Leseelement ausgerichtet und in relativer Bewegungsrichtung entlang des Pfades nach diesem Leseelement im Abstand angeordnet ist und durch Einrichtungen (29; 130) zum Weiterleiten des Bezugssignals an das Schreibelement, so daß der Indikator auf dem magnetischen Aufzeichnungsmedium gespeichert werden kann.

2. Gerät nach Anspruch 1, gekennzeichnet durch Einrichtungen (35; 148), welche eine weitere automatische Erzeugung eines Bezugssignals durch den Bezugssignalgeber an das Schreibelement bewirken, wodurch der aktuelle Stand der relativen Geschwindigkeit angezeigt wird.

3. Gerät nach Anspruch 1 oder 2, dadurch gekennzeichnet, daß auf dem Aufzeichnungsmedium gespeicherte Daten mit Aufzeichnungen von Zeitmeßsignalen durchsetzt werden.

14

4. Gerät nach Anspruch 1, 2 oder 3, dadurch gekennzeichnet, daß die die Angaben über die relative Geschwindigkeit erhaltende Einrichtung zum Messen der Zeitspanne zwischen Bezugssignal und abgeleitetem Signal vorgesehene Einrichtungen (33; 131) aufweist.

5. Gerät nach Anspruch 4, dadurch gekennzeichnet, daß die Meßeinrichtung für die Zeitspanne einen Zähler aufweist.

6. Gerät nach Anspruch 1, gekennzeichnet durch Einrichtungen (129, 128) für die Abgabe eines Frequenzbezugssignals an das Schreibelement, um eine Darstellung davon auf dem Aufzeichnungsmedium zu speichern und durch Frequenzmeßeinrichtungen (137, 140), welche auf Signale reagieren, die durch das Leseelement von der aufgezeichneten Darstellung des Frequenzbezugssignals für die Messung der Frequenz des Signals abgeleitet worden sind, wobei die Recheneinrichtung (122) für die Steuerung der Zeitbasis ferner auf die Frequenzmeßeinrichtung reagiert, so daß Zeitmeßsignale für die Steuerschaltung erzeugt werden, wodurch vorbestimmte Verschiebungsinkremente des magnetischen Aufzeichnungsmediums im Hinblick auf den Meßwertwandler definiert werden.

7. Gerät nach Anspruch 6, dadurch gekennzeichnet, daß die Frequenzmeßeinrichtung eine auf die Abgabeeinrichtung (129) für das Frequenzbezugssignal reagierende Einrichtung (140) aufweist.

8. Gerät nach Anspruch 6 oder 7, dadurch gekennzeichnet, daß die Frequenzmeßeinrichtung einen Zähler (137) aufweist.

9. Gerät nach Anspruch 6, 7 oder 8, dadurch gekennzeichnet, daß die Recheneinrichtung zur Steuerung der Zeitbasis in Intervallen arbeitet, so daß das Zeitmeßsignal als eine Funktion des Ablaufes von Zeit modifiziert wird.

10. Gerät nach Anspruch 6, 7, 8 oder 9, gekennzeichnet durch eine den Betrieb der Frequenzmeßeinrichtung in Intervallen erneut startende Einrichtung (146).

11. Gerät nach Anspruch 6, 7, 8, 9 oder 10, gekennzeichnet durch eine den Betrieb der Abgabeeinrichtung für das Frequenzbezugssignal in Intervallen erneut startende Einrichtung (148).

12. Gerät nach Anspruch 6 oder jeden an diesen anhängenden Anspruch, dadurch gekennzeichnet, daß die die Anzeige über die relative Geschwindigkeit erhaltende Einrichtung eine zum Messen des Zeitintervalls zwischen der Aufzeichnung eines Teils des Frequenzbezugssignals und dem Lesen dieses Teils durch das Leseelement erforderliche Einrichtung (131) aufweist.

13. Gerät nach einem der vorherigen Ansprüche, dadurch gekennzeichnet, daß das Datenaufzeichnungsgerät einen Wandler (17) aufweist, welcher im wesentlichen mit den Schreib- und Leseelementen ausgerichtet und abwärts davon in Richtung der relativen Aufzeichnungsbewegung angeordnet ist.

14. Gerät nach Anspruch 13, dadurch gekennzeichnet, daß das Datenaufzeichnungsgerät ferner mindestens einen zusätzlichen Wandler (18) aufweist, welcher nicht mit den Schreib- und Leseelementen ausgerichtet ist.

15. Gerät nach einem der vorherigen Ansprü-
che, dadurch gekennzeichnet, daß Führungsein-
richtungen für die manuelle Führung des Magnet-
aufzeichnungsmediums entlang des Pfades vor-
gesehen sind.

FIG. I

FIG.3

FIG.5

FIG. 2

0 053 224

FIG. 4

0 053 224